# EUROPÄISCHE PATENTSCHRIFT

(11) **EP 4 352 398 B1**
(45) Veröffentlichungstag und Bekanntmachung des Hinweises auf die Patenterteilung: **19.02.2025**
(21) Anmeldenummer: 23758542.7
(22) Anmeldetag: 16.08.2023
(51) Int. Cl.: F16L 55/165, B29C 63/36, F16L 55/40, B29C 63/00, B29C 63/18, B29C 63/20

(54) **VORRICHTUNG UND VERFAHREN ZUM AUSHÄRTEN EINES IN EINEM INVERSIONSVERFAHREN IN EIN ROHR GEZOGENEN LINERS**
DEVICE AND METHOD FOR CURING A LINER PULLED INTO A PIPE IN AN INVERSION METHOD
DISPOSITIF ET PROCÉDÉ DE DURCISSEMENT D'UN REVÊTEMENT INTÉRIEUR TIRÉ DANS UN TUYAU DANS UN PROCÉDÉ D'INVERSION

(30) Priorität: 30.08.2022 DE 102022121917
(43) Veröffentlichungstag der Anmeldung: 17.04.2024
(73) Patentinhaber: BRAWO SYSTEMS GmbH, 67659 Kaiserslautern (DE)
(72) Erfinder: SCHMITT, Christopher, 67731 Otterbach (DE); FRITZ, Maximilian, 67752 Rutsweiler (DE)
(74) Vertreter: Ter Meer Steinmeister & Partner
(86) Internationale Anmeldenummer: PCT/EP2023/072506
(87) Internationale Veröffentlichungsnummer: WO 2024/046761

(56) Entgegenhaltungen:
- WO-A1-2021/198477
- WO-A1-2022/090333
- DE-T2- 69 304 509
- US-A- 6 105 619

## Beschreibung

Die vorliegende Offenbarung betrifft eine Vorrichtung zum Aushärten eines in einem Inversionsverfahren in ein Rohr eingezogenen Liners und ein Verfahren zum Aushärten eines in einem Inversionsverfahren in ein Rohr eingezogenen Liners. Die vorliegende Offenbarung betrifft insbesondere eine Trennung eines Aushärtekopfes von einem Ende eines Liners aus der Ferne.

### Stand der Technik

Rohre beispielsweise zur Abwasserkanalisation können saniert werden, indem ein flexibler rohrförmiger Liner mit einer harzgetränkten Innenseite mittels eines Inversionsverfahrens in das Rohr eingezogen wird. Bei diesem Inversionsverfahren wird Luft oder Wasser in das Innere des Liners eingeleitet, wodurch sich der Liner fortschreitend an die Innenwand des Rohrs anlegt. Um das Innere des Liners mit Druck zu beaufschlagen, kann ein Ende des Liners an einer Luft- oder Wasserzuführvorrichtung befestigt werden. Das andere Ende des Liners, das in das Rohr eingezogen wird, kann verschlossen werden. Das geschlossene Ende bewegt sich beim fortschreitenden Umstülpen des Liners in das Rohr hinein.

Nach dem Einziehen des Liners kann das Harz mit Wärme oder UV-Licht ausgehärtet werden, damit sich der Liner fest mit dem Rohr verbindet. Hierzu kann ein Aushärtekopf, der mit dem verschlossenen Ende des Liners verbunden ist, zusammen mit dem Liner in das Rohr eingezogen werden. Nachdem der Liner und der Aushärtekopf in das Rohr eingezogen wurden, kann die Verbindung zwischen dem Aushärtekopf und dem Liner gelöst und der Aushärtekopf mittels eines Zugkabels und unter Wärme- oder Lichtabstrahlung zurück zum Eingang des Rohres gezogen werden, um das Harz auszuhärten.

Das Einziehen des Aushärtekopfes ist jedoch oftmals nur möglich, wenn am Zielort ein Zugang vorhanden ist, um das eingezogene Ende des Liners händisch vom Aushärtekopf zu trennen. Zudem muss der Liner während der Trennung drucklos sein. Durch das Ablassen des Drucks für die Trennung und einen erneuten Druckaufbau für die Zeit des Aushärtevorgangs kann zum Beispiel Luft im Liner eingeschlossen werden, wodurch sich die Qualität der Sanierung des Rohres verschlechtert.

WO 2021/198477 A1 und WO 2022/090333 A1 beschreiben jeweils eine Vorrichtung zum Aushärten einer Rohrleitungsauskleidung.

US 6 105 619 A beschreibt eine Vorrichtung zum Reparieren einer Rohrleitung und Verfahren zu deren Verwendung.

DE 693 04 509 T2 beschreibt ein Verfahren zur Beschichtung einer Abzweigeleitung.

### Offenbarung der Erfindung

Es ist eine Aufgabe der vorliegenden Offenbarung, eine Vorrichtung zum Aushärten eines in einem Inversionsverfahren in ein Rohr eingezogenen Liners und ein Verfahren zum Aushärten eines in einem Inversionsverfahren in ein Rohr eingezogenen Liners anzugeben, die ein Lösen einer Verbindung zwischen dem Liner und der Vorrichtung aus der Ferne ermöglichen. Insbesondere ist es eine Aufgabe der vorliegenden Offenbarung, einen Aushärtekopf von einem geschlossenen Ende eines Liners ohne Ablassen des Drucks im Liner zu trennen. Eine weitere Aufgabe besteht darin, eine Vorrichtung zum Aushärten eines Liners anzugeben, die in ihren Abmessungen klein ist und auch bei Rohren mit kleinem Innendurchmesser und/oder kleinen Aushärteköpfen verwendet werden kann.

Diese Aufgabe wird durch den Gegenstand der unabhängigen Ansprüche gelöst. Vorteilhafte Ausgestaltungen sind in den Unteransprüchen angegeben.

Gemäß einem unabhängigen Aspekt der vorliegenden Offenbarung ist eine Vorrichtung zum Aushärten eines in einem Inversionsverfahren in ein Rohr eingezogenen Liners angegeben. Die Vorrichtung kann auch als "Aushärtekopf" bezeichnet werden.

Die Vorrichtung umfasst ein Körperelement mit einem ersten Endabschnitt und einem zweiten Endabschnitt; eine pneumatische Kupplung am ersten Endabschnitt des Körperelements, wobei die pneumatische Kupplung für eine Verbindung mit einem zu invertierenden Liner eingerichtet ist; und eine Zugkupplung am zweiten Endabschnitt des Körperelements, wobei die Zugkupplung für eine Verbindung mit einem Zugkabel eingerichtet ist.

Erfindungsgemäß ist eine pneumatische Kupplung am Aushärtekopf vorgesehen, die es ermöglicht, dass der Aushärtekopf nach dem Einziehen des Liners in das Rohr aus der Ferne pneumatisch vom Liner getrennt werden kann. Nach dem Trennen der Verbindung mit dem Liner kann der Aushärtekopf mittels des Zugkabels aus dem Rohr gezogen werden, wobei der Aushärtekopf während des Herausziehens, z.B. Wärme oder Licht, abstrahlen kann, um den in das Rohr eingezogenen Liner auszuhärten. Damit ist es zum Beispiel nicht notwendig, den Druck im Liner nach dem Einziehen des Liners und vor dem Herausziehen des Aushärtekopfes abzulassen. Im Ergebnis kann eine Qualität der Rohrsanierung verbessert werden. Zudem kann die pneumatische Kupplung klein sein, sodass wenig Bauraum für die pneumatische Kupplung erforderlich ist und auch bei Rohren mit kleinem Innendurchmesser und/oder kleinen Aushärteköpfen verwendet werden kann.

Der Begriff "Inversionsverfahren", wie er im Rahmen der vorliegenden Offenbarung verwendet wird, bezeichnet ein Verfahren, bei dem ein flexibler, rohrförmiger Liner mit einer z.B. harzgetränkten Innenseite in ein Rohr eingezogen wird. Hierzu wird ein Medium wie Luft oder Wasser in das Innere des Liners eingeleitet, wodurch sich der Liner fortschreitend an die Innenwand des Rohres anlegt. Um das Innere des Liners mit Druck beaufschlagen zu können, ist ein Ende des Liners an einer Luft- oder Wasserzuführvorrichtung befestigt. Das andere Ende des Liners, das in das Rohr eingezogen wird, ist verschlossen. Das geschlossene Ende bewegt sich beim fortschreitenden Umstülpen des Liners in das Rohr hinein, um die Innenwand des Rohres auszukleiden, wobei die harzgetränkte Innenseite des Liners nach dem Einziehen bzw. Umstülpen an der Innenwand des Rohres anliegt.

Vorzugsweise ist das Rohr ein zu sanierendes Rohr oder ein zu sanierender Kanal, wie zum Beispiel ein Abwasserkanal. Die vorliegende Offenbarung ist jedoch nicht hierauf beschränkt und das Rohr kann jedes Rohr sein, in das ein Liner zum Zwecke der Verstärkung und/oder Sanierung eingeführt werden kann.

Der Liner besteht aus einem flexiblen Material, wie zum Beispiel korrosionsbeständigen Synthese- und/oder Glasfasern.

Der Liner ist mit einem aushärtbaren Material präpariert, das nach dem Einziehen bzw. Umstülpen an der Innenwand des Rohres anliegt. Das aushärtbare Material kann zum Beispiel ein Harz sein. Das aushärtbare Material kann in einigen Ausführungsformen ausgehärtet werden, indem das aushärtbare Material mit Energie bestrahlt wird, wie zum Beispiel Wärmeenergie oder Licht, insbesondere UV-Licht.

Vorzugsweise umfasst die pneumatische Kupplung einen Zylinder und einen Kolben, der im Zylinder beweglich entlang der Längsachse des Zylinders und des Körperelements angeordnet ist. Der Kolben bildet zusammen mit dem Zylinder einen abgeschlossenen Hohlraum, dessen Volumen sich durch die Bewegung des Kolbens innerhalb des Zylinders verändert. Durch Druckbeaufschlagung des Zylinders kann der Kolben bewegt werden.

Vorzugsweise ist der Zylinder über eine Druckleitung, insbesondere eine Druckluftleitung, mit einer Druckerzeugungsvorrichtung außerhalb des Rohres verbunden, sodass dem Zylinder von außen ein Druckmedium (z.B. Druckluft) zugeführt werden kann. Zudem sind Mittel vorgesehen, um eine Druckentlastung durchzuführen, also ein Ablassen des Drucks am Zylinder. Dies kann zum Beispiel durch Öffnen eines Ventils und/oder eines Hebels außerhalb des Rohres und über die Druckleitung erfolgen.

Vorzugsweise weist der Kolben einen Außendurchmesser von 1mm bis 10mm, 1mm bis 5mm oder 1mm bis 3mm auf. Beispielsweise kann der Außendurchmesser des Kolbens etwa 2mm sein.

Vorzugsweise ist der Kolben linear innerhalb des Zylinders beweglich. Insbesondere kann der Kolben entlang einer Längsachse des Zylinders beweglich sein.

Vorzugsweise erstreckt sich der Zylinder durch das Körperelement. Insbesondere kann sich der Zylinder zumindest teilweise zwischen dem ersten Endabschnitt und dem zweiten Endabschnitt des Körperelements erstrecken. Der Kolben kann derart bewegt werden, dass er am ersten Endabschnitt aus dem Zylinder austritt, um den Liner am ersten Endabschnitt des Körperelements zu fixieren.

Vorzugsweise erstrecken sich der Zylinder und der Kolben entlang einer Längsachse des Körperelements, die zwischen dem ersten Endabschnitt und dem zweiten Endabschnitt definiert ist.

Vorzugsweise sind der Zylinder und der Kolben im Wesentlichen mittig im Körperelement angeordnet.

Vorzugsweise ist der Kolben zwischen einer ersten Position oder Stellung und einer zweiten Position oder Stellung beweglich. Beispielsweise kann der Kolben linear zwischen der ersten Position oder Stellung und der zweiten Position oder Stellung beweglich sein.

Vorzugsweise ist der Kolben eingerichtet, um den Liner in der ersten Position zu halten und den Liner in der zweiten Position freizugeben. Die erste Position kann damit eine geschlossene Position sein (entsprechend einer geschlossenen pneumatischen Kupplung), und die zweite Position kann eine offene Position sein (entsprechend einer offenen pneumatischen Kupplung).

In einigen Ausführungsformen kann der Kolben in der ersten Position am ersten Endabschnitt des Körperelements aus dem Zylinder vorstehen oder austreten, um mit dem Liner oder einem Befestigungselement am Liner einzugreifen und den Liner so am ersten Endabschnitt des Körperelements zu fixieren. Der Kolben kann von der ersten Position in die zweite Position bewegt werden, sodass der Kolben am ersten Endabschnitt des Körperelements nicht oder nur wenig aus dem Zylinder vorsteht oder austritt, um den Liner oder das Befestigungselement am Liner freizugeben.

Vorzugsweise ist der Kolben eingerichtet, um sich bei einer Druckbeaufschlagung von der zweiten Position in die erste Position zu bewegen, und um sich bei einer Druckentlastung von der ersten Position in die zweite Position zu bewegen. Alternativ kann der Kolben eingerichtet sein, um sich bei einer Druckbeaufschlagung von der ersten Position in die zweite Position zu bewegen, und um sich bei einer Druckentlastung von der zweiten Position in die erste Position zu bewegen.

Vorzugsweise umfasst die Vorrichtung weiter wenigstens ein elastisches Element, das angeordnet ist, um eine Kraft auf den Kolben in Richtung der zweiten Position auszuüben. Beispielsweise kann das wenigstens eine elastische Element den Kolben bei einer Druckentlastung von der ersten Position in die zweite Position bewegen, insbesondere drücken, um den Liner freizugeben. Die durch die Druckbeaufschlagung auf den Kolben ausgeübte Kraft kann größer sein als die durch das wenigstens eine elastische Element ausgeübte elastische Kraft, sodass der Kolben bei einer Druckbeaufschlagung entgegen der elastischen Kraft in die erste Position bewegt werden und den Liner halten kann.

Vorzugsweise umfasst, oder ist das wenigstens eine elastische Element eine Feder, wie zum Beispiel eine Spiralfeder.

Vorzugsweise umfasst die Vorrichtung weiter ein Aufnahmeelement, das eingerichtet ist, um einen Endabschnitt des Kolbens in der ersten Position aufzunehmen. Der Endabschnitt des Kolbens entspricht dem Ende des Kolbens, das aus dem Zylinder vorsteht, wenn der Kolben in der ersten bzw. geschlossenen Position ist. Damit kann ein offenes Ende des Kolbens fixiert werden, sodass eine Beschädigung oder Verformung des Kolbens durch eine durch den Liner auf den Kolben ausgeübte Zugkraft verhindert werden kann. Zudem kann ein versehentliches Lösen des Liners von der pneumatischen Kupplung vermieden werden.

Vorzugsweise ist das Aufnahmeelement im oder am ersten Endabschnitt des Körperelements angeordnet.

Vorzugsweise weist das Aufnahmeelement eine Öffnung auf, in die der Kolben einführbar ist. Der Endabschnitt des Kolbens kann in der ersten Position des Kolbens in die Öffnung eingeführt sein, und kann in der zweiten Position nicht in die Öffnung eingeführt sein.

Vorzugsweise ist die Öffnung eine Vertiefung, ein Loch oder ein Durchgangsloch im Aufnahmeelement.

Vorzugsweise weist das Körperelement am ersten Endabschnitt, insbesondere an einer Stirnseite des Körperelements, eine Ausbuchtung oder Vertiefung auf, in der der Ausgang des Zylinders und das Aufnahmeelement angeordnet sind.

Vorzugsweise ist das Aufnahmeelement ein Vorsprung und/oder ein Steg. Der Vorsprung oder Steg kann sich über den Zylinder erstrecken, sodass der Kolben bei einem Ausfahren aus dem Zylinder auf das Aufnahmeelement trifft. Beispielsweise kann die Öffnung koaxial mit der Längsachse des Zylinders und/oder der Längsachse des Kolbens angeordnet sein, sodass der Kolben durch die Bewegung in die erste Position in die Öffnung eingeführt werden kann.

Vorzugsweise weist das Aufnahmeelement eine Keilform auf. In einigen Ausführungsformen kann sich das keilförmige Aufnahmeelement von einem befestigten Ende hin zu einem offenen Ende verjüngen und damit am befestigten Ende breiter sein. Hierdurch kann verhindert werden, dass sich der Liner bei einer Öffnung der pneumatischen Kupplung verhakt und sich nicht von der pneumatischen Kupplung lösen kann.

Vorzugsweise ist das Aufnahmeelement mit dem Körperelement verbunden oder einstückig mit dem Körperelement ausgebildet.

Vorzugsweise umfasst die Vorrichtung weiter einen Aufnahmeraum, der zwischen einem Ende des Zylinders und dem Aufnahmeelement ausgebildet ist. Der Aufnahmeraum kann an einer Seite offen sein, sodass eine Öse des Liners oder eine Öse eines mit dem Liner verbundenen Befestigungselements in den Aufnahmeraum einsetzbar ist, wenn der Kolben in der zweiten Position ist. Der Kolben kann sich durch die Öse erstrecken und die zuvor offene Seite des Aufnahmeraumes verschließen, wenn der Kolben in der ersten Position ist, um den Liner zu halten. Vorzugsweise umfasst die Vorrichtung weiter wenigstens eine Aushärtevorrichtung, die am Körperelement angeordnet ist. Damit bildet der Aushärtekopf gleichzeitig das Haltesystem für den Liner.

Die wenigstens eine Aushärtevorrichtung ist eingerichtet, um Energie zum Aushärten des in das Rohr eingezogenen Liners zu emittieren, wie zum Beispiel Wärme oder Licht, insbesondere UV-Licht. Typischerweise umfasst die wenigstens eine Aushärtevorrichtung eine oder mehrere LEDs.

Vorzugsweise sind mehrere Aushärtevorrichtungen, wie zum Beispiel mehrere LEDs, konzentrisch um die Längsachse des Körperelements herum angeordnet, bevorzugt an einer Außenseite des Körperelements. Insbesondere können die mehreren Aushärtevorrichtungen um den Zylinder und den Kolben herum angeordnet sein.

Vorzugsweise weist das Körperelement Durchmesser im Bereich von 1cm bis 10cm, 1cm bis 5cm oder 1cm bis 3cm auf. Der Durchmesser des Körperelements kann zum Beispiel in etwa 2cm sein.

Vorzugsweise weist die Vorrichtung eine pneumatische Kupplung mit einem Zylinder und einem Kolben auf. Alternativ kann die Vorrichtung mehrere pneumatische Kupplungen mit jeweils einem Zylinder und einem Kolben aufweisen.

Gemäß einem unabhängigen Aspekt der vorliegenden Offenbarung ist ein Verfahren zum Aushärten eines in einem Inversionsverfahren in ein Rohr eingezogenen Liners mit der in diesem Dokument beschriebenen Vorrichtung angegeben. Das Verfahren umfasst ein umstülpendes Einziehen des Liners von einem Startpunkt aus in das Rohr, wobei der Liner mit der pneumatischen Kupplung der Vorrichtung verbunden ist, sodass die Vorrichtung mit in das Rohr eingezogen wird; ein Öffnen der pneumatischen Kupplung nach dem Einziehen des Liners, um die Verbindung zwischen der Vorrichtung und dem Liner zu lösen; und ein Ziehen der Vorrichtung zurück zum Startpunkt durch ein mit der Zugkupplung der Vorrichtung verbundenes Zugkabel und unter Abstrahlung einer Energie zum Aushärten des Liners.

Das Verfahren kann die in Bezug auf die Vorrichtung zum Aushärten eines in einem Inversionsverfahren in ein Rohr eingezogenen Liners beschriebenen Aspekte implementieren.

### Kurze Beschreibung der Zeichnungen

Ausführungsbeispiele der Offenbarung sind in den Figuren dargestellt und werden im Folgenden näher beschrieben. Es zeigen:
Figur 1 schematisch ein Einziehen eines Liners und eines Aushärtekopfes in ein Rohr,
Figur 2 schematisch ein Ausziehen des Aushärtekopfes aus dem Rohr, um den Liner auszuhärten,
Figur 3 schematisch eine Vorrichtung zum Aushärten eines in einem Inversionsverfahren in ein Rohr eingezogenen Liners mit geöffneter pneumatischer Kupplung gemäß Ausführungsformen der vorliegenden Offenbarung,
Figur 4 schematisch eine Vorrichtung zum Aushärten eines in einem Inversionsverfahren in ein Rohr eingezogenen Liners mit geschlossener pneumatischer Kupplung gemäß Ausführungsformen der vorliegenden Offenbarung,
Figur 5 schematisch eine Vorrichtung zum Aushärten eines in einem Inversionsverfahren in ein Rohr eingezogenen Liners gemäß weiteren Ausführungsformen der vorliegenden Offenbarung, und
Figur 6 ein Flussdiagram eines Verfahrens zum Aushärten eines in einem Inversionsverfahren in ein Rohr eingezogenen Liners gemäß Ausführungsformen der vorliegenden Offenbarung.

### Ausführungsformen der Offenbarung

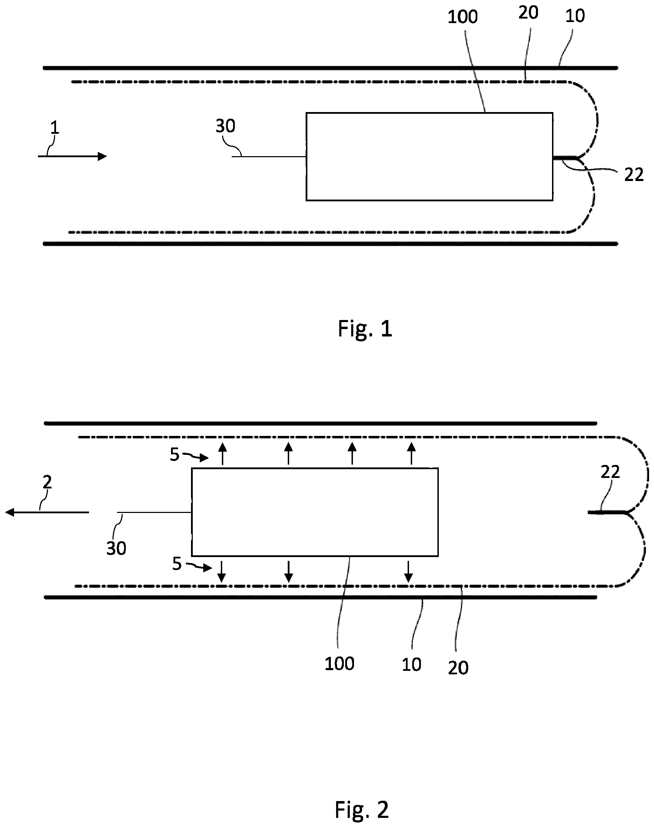

Im Folgenden werden, sofern nicht anders vermerkt, für gleiche und gleichwirkende Elemente gleiche Bezugszeichen verwendet. Figuren 1 und 2 zeigen schematisch ein Inversionsverfahren. Insbesondere zeigt Figur 1 schematisch ein Einziehen eines Liners 20 und eines Aushärtekopfes 100 in ein Rohr 10, und Figur 2 zeigt schematisch ein Ausziehen des Aushärtekopfes 100 aus dem Rohr 10, um den zuvor eingezogenen Liner 20 auszuhärten.

Inversionsverfahren können verwendet werden, um ein Rohr 10 unter Verwendung eines Liners 20 zu sanieren und/oder verstärken. Der Liner 20 kann aus einem flexiblen Material, wie zum Beispiel korrosionsbeständigen Synthese- und/oder Glasfasern, bestehen.

Im Detail kann der Liner 20 eine mit einem aushärtbaren Material getränkte Innenseite aufweisen. In einigen Ausführungsformen kann das aushärtbare Material ein Harz sein. Der Liner 20 kann in einer Einzugsrichtung 1 in das Rohr 10 eingezogen werden, wie es in der Figur 1 gezeigt ist, sodass die mit dem aushärtbaren Material getränkte Innenseite nach außen gestülpt wird und sich an die Innenwand des Rohres 10 anlegt. Hierzu kann beispielsweise Luft oder Wasser in das Innere des Liners 20 eingeleitet werden, wodurch sich der Liner 20 fortschreitend an die Innenwand des Rohrs 10 anlegt. Um das Innere des Liners 20 mit Druck zu beaufschlagen, kann ein Ende des Liners 20 an einer Luft- oder Wasserzuführvorrichtung (nicht gezeigt) befestigt werden. Das andere Ende des Liners 20, das in das Rohr 10 eingezogen wird, kann verschlossen werden. Das geschlossene Ende bewegt sich beim fortschreitenden Umstülpen des Liners 20 in das Rohr 10 hinein.

Nach dem Einziehen des Liners 20 kann das aushärtbare Material mit Wärme oder UV-Licht ausgehärtet werden, damit sich der Liner 20 fest mit dem Rohr 10 verbindet. Hierzu kann ein Aushärtekopf 100, der z.B. über ein kurzes Seil 22 mit dem verschlossenen Ende des Liners 20 verbunden ist, zusammen mit dem Liner 20 in das Rohr 10 eingezogen werden. Nachdem der Liner 20 und der Aushärtekopf 100 in das Rohr 10 eingezogen wurden, kann die Verbindung zwischen dem Aushärtekopf 100 und dem Liner 20 bzw. dem Seil 22 gelöst werden. Wie in der Figur 2 dargestellt kann der Aushärtekopf 100 anschließend mittels eines Zugkabels 30 und unter Wärme- oder Lichtabstrahlung S in eine Auszugsrichtung 2, die entgegengesetzt zur Einzugsrichtung 1 ist, zurück zum Eingang des Rohres 10 gezogen werden, um das aushärtbare Material auszuhärten.

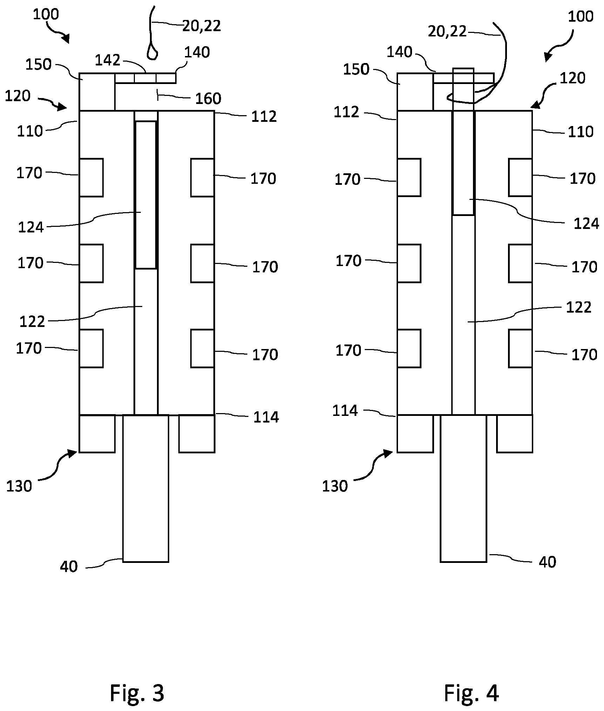

Figur 3 zeigt schematisch eine Vorrichtung 100 zum Aushärten eines in einem Inversionsverfahren in ein Rohr eingezogenen Liners mit geöffneter pneumatischer Kupplung gemäß Ausführungsformen der vorliegenden Offenbarung. Figur 4 zeigt die Vorrichtung 100 mit geschlossener pneumatischer Kupplung. Die Vorrichtung 100 wird im Rahmen der vorliegenden Offenbarung auch als "Aushärtekopf" bezeichnet.

Die Vorrichtung 100 umfasst ein Körperelement 110 mit einem ersten Endabschnitt 112 und einem zweiten Endabschnitt 114; eine pneumatische Kupplung 120 am ersten Endabschnitt 112 des Körperelements 110, wobei die pneumatische Kupplung 120 für eine Verbindung mit einem zu invertierenden Liner 20 eingerichtet ist; und eine Zugkupplung 130 am zweiten Endabschnitt 114 des Körperelements 110, wobei die Zugkupplung 130 für eine Verbindung mit einem Zugkabel (nicht gezeigt) eingerichtet ist.

Die pneumatische Kupplung 120 kann zum Beispiel mit dem in der Figur 1 gezeigten Seil 22 am geschlossenen Ende des Liners 20 lösbar verbunden oder verbindbar sein, damit die Vorrichtung 100 zusammen mit dem Liner 20 in das Rohr eingezogen werden kann. Zudem kann die Zugkupplung 130 mit dem in der Figur 1 gezeigten Zugkabel 30 verbunden oder verbindbar sein, damit die Vorrichtung 100 nach dem Einziehen des Liners 20 und Lösen der pneumatischen Kupplung 120 vom Liner 20 aus dem Rohr ausgezogen werden kann.

Die pneumatische Kupplung 120 kann in einigen Ausführungsformen einen Zylinder 122 und einen Kolben 124, der im Zylinder 122 linear beweglich angeordnet ist, umfassen. Durch Druckbeaufschlagung des Zylinders 122 kann der Kolben 124 linear bewegt werden. Beispielsweise kann der Zylinder 122 über eine Druckluftleitung 40 mit einer Druckerzeugungsvorrichtung außerhalb des Rohres verbunden sein, sodass dem Zylinder 122 von außen Druckluft zugeführt werden kann.

Der Zylinder 122 kann sich teilweise oder vollständig durch das Körperelement 110 erstrecken. Insbesondere kann sich der Zylinder 122 zwischen dem ersten Endabschnitt 112 und dem zweiten Endabschnitt 114 entlang einer Längsachse des Körperelements 110 erstrecken. In einigen Ausführungsformen sind der Zylinder 122 und der Kolben 124 im Wesentlichen mittig im Körperelement 110 angeordnet bzw. im Körperelement 110 zentriert.

Der Kolben 124 ist zwischen einer ersten Position oder Stellung (Figur 2) und einer zweiten Position oder Stellung (Figur 1) beweglich. Insbesondere kann der Kolben 124 den Liner 20 in der ersten Position halten und den Liner 20 in der zweiten Position freigeben. Anders gesagt kann die erste Position eine geschlossene Position sein (entsprechend einer geschlossenen pneumatischen Kupplung, siehe Figur 2), und die zweite Position kann eine offene Position sein (entsprechend einer offenen pneumatischen Kupplung, siehe Figur 1).

In einigen Ausführungsformen kann der Kolben 124 in der ersten Position am ersten Endabschnitt 112 des Körperelements 110 vorstehen oder austreten, um mit dem Liner 20 oder einem Befestigungselement am Liner 20 einzugreifen und den Liner 20 so am ersten Endabschnitt 112 des Körperelements 110 zu halten, wie es in der Figur 2 gezeigt ist. Weiterhin kann der Kolben 124 von der ersten Position in die zweite Position bewegt werden, sodass der Kolben 124 am ersten Endabschnitt 112 des Körperelements 110 nicht oder nur wenig vorsteht oder austritt, um den Liner 20 oder das Befestigungselement am Liner 20 freizugeben, wie es in der Figur 1 gezeigt ist.

Die pneumatische Kupplung 120 kann eingerichtet sein, damit sich der Kolben 124 bei einer Druckbeaufschlagung über die Druckluftleitung 40 von der zweiten Position in die erste Position bewegt, und sich bei einer Druckentlastung von der ersten Position in die zweite Position bewegt. Die Druckentlastung kann zum Beispiel durch Öffnen eines Hebels oder Ventils erfolgen, der/das mit der Druckluftleitung 40 verbunden ist.

In einigen Ausführungsformen kann die Vorrichtung 100 weiter wenigstens ein elastisches Element (nicht gezeigt) umfassen, das angeordnet ist, um eine Kraft auf den Kolben 124 in Richtung der zweiten Position auszuüben. Beispielsweise kann das wenigstens eine elastische Element den Kolben 124 bei einer Druckentlastung von der ersten Position in die zweite Position bewegen, insbesondere drücken, um den Liner 20 freizugeben. Das wenigstens eine elastische Element kann zum Beispiel eine Feder sein.

Die Vorrichtung 100 kann in einigen Ausführungsformen ein Aufnahmeelement 140 im oder am ersten Endabschnitt 112 des Körperelements 110 umfassen, das eingerichtet ist, um einen Endabschnitt des Kolbens 124 in der ersten Position aufzunehmen. Damit kann ein aus dem Zylinder 122 vorstehendes Ende des Kolbens 124 fixiert werden, so dass eine Beschädigung oder Verformung des Kolbens 124 durch eine durch den Liner 20 auf den Kolben 124 ausgeübte Zugkraft verhindert werden kann. Zudem kann ein versehentliches Lösen des Liners 20 von der pneumatischen Kupplung 120 vermieden werden.

Das Aufnahmeelement 140 kann eine Öffnung 142 aufweisen, in die der Kolben 124 einführbar ist. Die Öffnung 142 kann zum Beispiel eine Vertiefung, ein Loch oder ein Durchgangsloch im Aufnahmeelement 140 sein.

In einigen Ausführungsformen kann das Aufnahmeelement 140 als Vorsprung oder Steg ausgebildet sein. Das Aufnahmeelement 140 kann sich in einer ersten Erstreckungsrichtung über den Zylinder 122 und den Kolben 124 erstrecken, sodass der Kolben 124 bei einem Ausfahren aus dem Zylinder 122 auf das Aufnahmeelement 140 trifft. Beispielsweise kann die Öffnung 142 koaxial zur Längsachse des Zylinders 122 und/oder der Längsachse des Kolbens 124 angeordnet sein, sodass der Kolben 124 in die Öffnung 142 eingeführt und aus der Öffnung 142 herausgeführt werden kann. Die erste Erstreckungsrichtung kann im Wesentlichen senkrecht zur Längsachse des Körperelements 110 und/oder zur Längsachse des Zylinders 122 und/oder zur Längsachse des Kolbens 124 sein.

Die Vorrichtung 100 kann weiter eine Stütze 150 umfassen, die sich am ersten Endabschnitt 112 des Körperelements 110 in eine zweite Erstreckungsrichtung, die senkrecht zur ersten Erstreckungsrichtung ist, z.B. nach oben erstreckt. Die zweite Erstreckungsrichtung kann im Wesentlichen parallel zur Längsachse des Körperelements 110 und/oder zur Längsachse des Zylinders 122 und/oder zur Längsachse des Kolbens 124 sein.

Die Stütze 150 kann als Vorsprung ausgebildet sein. Das Aufnahmeelement 140 kann sich von einer Seite der Stütze 150 erstrecken, sodass das Aufnahmeelement 140 über dem Kolben 124 angeordnet ist.

Die Vorrichtung 100 kann weiter einen Aufnahmeraum 160 umfassen, der zwischen einem Ende des Zylinders 122, insbesondere dem ersten Endabschnitt 112 des Körperelements 110, und dem Aufnahmeelement 140 ausgebildet ist. Der Aufnahmeraum 160 kann an einer Seite offen und an einer anderen Seite durch die Stütze 150 begrenzt sein, sodass eine Öse des Liners 20 oder eine Öse eines mit dem Liner 20 verbundenen Befestigungselements in den Aufnahmeraum 160 einsetzbar ist, wenn der Kolben 124 in der zweiten Position ist (Figur 1). Der Kolben 124 kann sich durch die Öse erstrecken und die zuvor offene Seite des Aufnahmeraumes 160 verschließen, wenn der Kolben 124 in der ersten Position ist, um den Liner 20 zu halten (Figur 2).

In einigen Ausführungsformen können das Körperelement 110 und/oder das Aufnahmeelement 140 und/oder die Stütze 150 einstückig ausgebildet sein.

Die Vorrichtung 100 umfasst typischerweise weiter wenigstens eine Aushärtevorrichtung 170, die am Körperelement 110 angeordnet ist. Die wenigstens eine Aushärtevorrichtung 170 ist eingerichtet, um Energie zum Aushärten des in das Rohr eingezogenen Liners zu emittieren, wie zum Beispiel Wärme oder Licht, insbesondere UV-Licht. Typischerweise umfasst die wenigstens eine Aushärtevorrichtung 170 eine oder mehrere LEDs. In einigen Ausführungsformen können mehrere Aushärtevorrichtungen 170, wie zum Beispiel mehrere LEDs, konzentrisch um die Längsachse des Körperelements 110 herum an einer Außenseite des Körperelements 110 angeordnet sein.

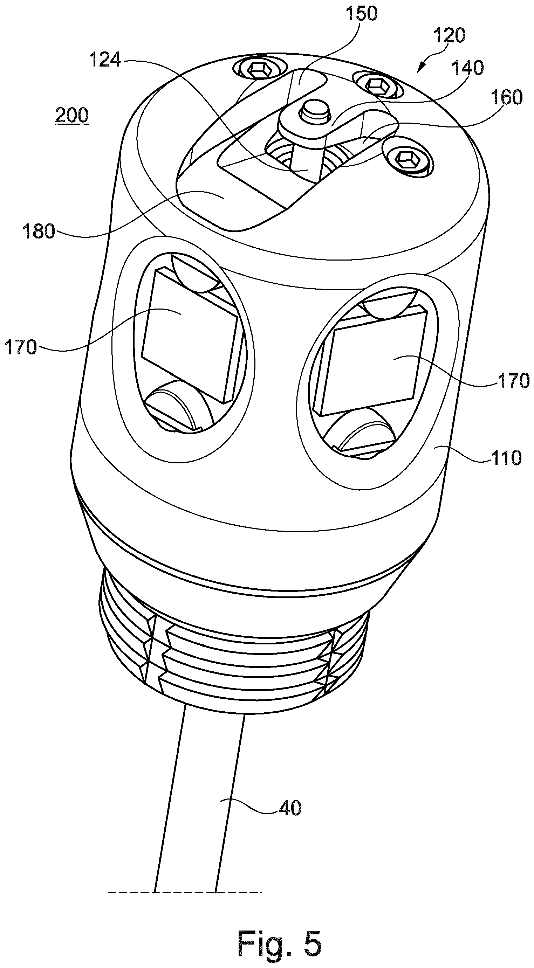

Figur 5 zeigt schematisch eine Vorrichtung 200 zum Aushärten eines in einem Inversionsverfahren in ein Rohr eingezogenen Liners gemäß weiteren Ausführungsformen der vorliegenden Offenbarung.

Die Vorrichtung 200 ist ähnlich zu der in den Figuren 3 und 4 gezeigten Vorrichtung und auf eine Beschreibung von ähnlichen oder identischen Merkmalen und Eigenschaften wird insoweit auf die Beschreibung der Figuren 3 und 4 verwiesen.

Im Beispiel der Figur 5 ist das Aufnahmeelement 140 ein Vorsprung oder Steg und erstreckt sich in einer ersten Erstreckungsrichtung über den Kolben 124, so dass der Kolben 124 bei einem Ausfahren aus dem Zylinder 122 auf das Aufnahmeelement 140 trifft. Die Vorrichtung 200 umfasst weiter die Stütze 150, die sich am ersten Endabschnitt 112 des Körperelements 110 in eine zweite Erstreckungsrichtung, die senkrecht zur ersten Erstreckungsrichtung ist, z.B. nach oben erstreckt. Das Aufnahmeelement 140 kann sich von einer Seite der Stütze 150 so erstrecken, sodass das Aufnahmeelement 140 über dem Kolben 124 angeordnet ist.

Das Aufnahmeelement 140 und die Stütze 150 können einstückig ausgebildet sein und den Aufnahmeraum 160 definieren.

In einigen Ausführungsformen kann das Aufnahmeelement 140 eine Keilform aufweisen. Das keilförmige Aufnahmeelement 140 kann sich von einem z.B. an der Stütze 150 liegenden Ende hin zu einem offenen Ende verjüngen und damit am an der Stütze 150 liegenden Ende breiter sein als am offenen Ende. Hierdurch kann verhindert werden, dass sich der Liner bei einer Öffnung der pneumatischen Kupplung 120 verhakt und sich von der pneumatischen Kupplung 120 nicht lösen kann.

In einigen Ausführungsformen weist das Körperelement 110 am ersten Endabschnitt, insbesondere an einer Stirnseite des Körperelements 110, eine Ausbuchtung 180 auf, in der der Ausgang des Zylinders 122 und das Aufnahmeelement 140 sowie der vorstehende Teil des Kolbens 124 angeordnet sind. Die Ausbuchtung 180 kann zum Beispiel durch die Stütze 150 definiert werden. Beispielsweise kann die Stütze 150 einen U-förmigen Ausschnitt aufweisen, der die Ausbuchtung 180 und auch den Aufnahmeraum 160 bildet oder definiert.

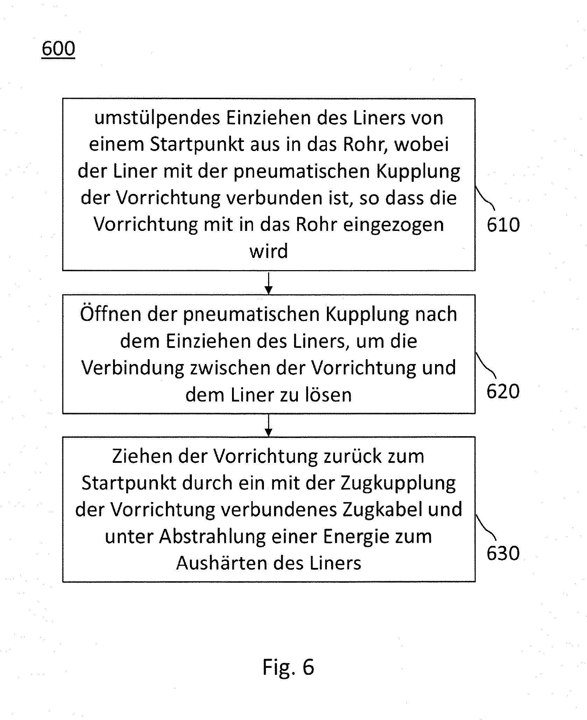

Figur 6 zeigt ein Flussdiagram eines Verfahrens 600 zum Aushärten eines in einem Inversionsverfahren in ein Rohr eingezogenen Liners gemäß Ausführungsformen der vorliegenden Offenbarung. Das Verfahren 600 verwendet die Vorrichtung bzw. den Aushärtekopf der vorliegenden Offenbarung.

Das Verfahren 600 umfasst im Block 610 ein umstülpendes Einziehen des Liners von einem Startpunkt aus in das Rohr, wobei der Liner mit der pneumatischen Kupplung der Vorrichtung verbunden ist, sodass die Vorrichtung mit in das Rohr eingezogen wird; im Block 620 ein Öffnen der pneumatischen Kupplung nach dem Einziehen des Liners, um die Verbindung zwischen der Vorrichtung und dem Liner zu lösen; und im Block 630 ein Ziehen der Vorrichtung zurück zum Startpunkt durch ein mit der Zugkupplung der Vorrichtung verbundenes Zugkabel und unter Abstrahlung einer Energie zum Aushärten des Liners.

Erfindungsgemäß ist eine pneumatische Kupplung am Aushärtekopf vorgesehen, die es ermöglicht, dass der Aushärtekopf nach dem Einziehen des Liners in das Rohr aus der Ferne pneumatisch vom Liner getrennt werden kann. Nach dem Trennen der Verbindung mit dem Liner kann der Aushärtekopf mittels des Zugkabels aus dem Rohr gezogen werden, wobei der Aushärtekopf während des Herausziehens z.B. Wärme oder Licht abstrahlen kann, um den in das Rohr eingezogenen Liner auszuhärten. Damit ist es zum Beispiel nicht notwendig, den Druck im Liner nach dem Einziehen des Liners und vor dem Herausziehen des Aushärtekopfes abzulassen.

Im Ergebnis kann eine Qualität der Rohrsanierung verbessert werden. Zudem kann die pneumatische Kupplung klein sein, sodass wenig Bauraum für die pneumatische Kupplung erforderlich ist und auch bei Rohren mit kleinem Innendurchmesser und/oder kleinen Aushärteköpfen verwendet werden kann.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

## Patentansprüche

1. Vorrichtung (100, 200) zum Aushärten eines in einem Inversionsverfahren in ein Rohr (10) eingezogenen Liners (20), umfassend:
ein Körperelement (110) mit einem ersten Endabschnitt (112) und einem zweiten Endabschnitt (114); und
eine Zugkupplung (130) am zweiten Endabschnitt (114) des Körperelements (110), wobei die Zugkupplung (130) für eine Verbindung mit einem Zugkabel (30) eingerichtet ist,
**gekennzeichnet durch**
eine pneumatische Kupplung (120) am ersten Endabschnitt (112) des Körperelements (110), wobei die pneumatische Kupplung (120) für eine Verbindung mit einem zu invertierenden Liner (20) eingerichtet ist.

2. Die Vorrichtung (100, 200) nach Anspruch 1, wobei die pneumatische Kupplung (120) einen Zylinder (122) und einen Kolben (124) umfasst, wobei der Kolben (124) im Zylinder (122) beweglich angeordnet ist, insbesondere wobei sich der Zylinder (122) durch das Körperelement (110) erstreckt.

3. Die Vorrichtung (100, 200) nach Anspruch 2, wobei der Kolben (124) entlang einer Längsachse des Körperelements (110) zwischen einer ersten Position und einer zweiten Position beweglich ist, und/oder wobei der Kolben (124) eingerichtet ist, um den Liner (20) in der ersten Position zu halten und den Liner (20) in der zweiten Position freizugeben.

4. Die Vorrichtung (100, 200) nach Anspruch 3, wobei der Kolben (124) eingerichtet ist, um sich bei einer Druckbeaufschlagung von der zweiten Position in die erste Position zu bewegen, und um sich bei einer Druckentlastung von der ersten Position in die zweite Position zu bewegen.

5. Die Vorrichtung (100, 200) nach Anspruch 3 oder 4, weiter umfassend wenigstens ein elastisches Element, das angeordnet ist, um eine Kraft auf den Kolben (124) in Richtung der zweiten Position auszuüben, insbesondere wobei das wenigstens eine elastische Element eine Feder ist.

6. Die Vorrichtung (100, 200) nach einem der Ansprüche 2 bis 5, weiter umfassend ein Aufnahmeelement (140), das eingerichtet ist, um einen Endabschnitt des Kolbens (124) in der ersten Position aufzunehmen.

7. Die Vorrichtung (100, 200) nach Anspruch 6, wobei:
- das Aufnahmeelement (140) ein Vorsprung ist; und/oder
- das Aufnahmeelement (140) ein Steg ist, und/oder
- das Aufnahmeelement (140) einstückig mit dem Körperelement (110) ausgebildet ist.

8. Die Vorrichtung (100, 200) nach Anspruch 6 oder 7, wobei:
- das Aufnahmeelement (140) eine Keilform aufweist; und/oder
- das Aufnahmeelement (140) eine Öffnung (142) aufweist, in die der Kolben (124) einführbar ist.

9. Die Vorrichtung (100, 200) nach Anspruch 6, 7 oder 8, weiter umfassend einen Aufnahmeraum (160), der zwischen einem Ende des Zylinders (122) und dem Aufnahmeelement (140) ausgebildet ist.

10. Die Vorrichtung (100, 200) nach Anspruch 9, wobei eine Öse des Liners (20) oder eines mit dem Liner (20) verbundenen Befestigungselements in den Aufnahmeraum (160) einsetzbar ist, wenn der Kolben (124) in der zweiten Position ist, und wobei sich der Kolben (124) durch die Öse erstrecken kann, wenn der Kolben (124) in der ersten Position ist, um den Liner (20) zu halten.

11. Die Vorrichtung (100, 200) nach einem der Ansprüche 1 bis 10, weiter umfassend wenigstens eine Aushärtevorrichtung (170), die am Körperelement (110) angeordnet ist, insbesondere wobei die wenigstens eine Aushärtevorrichtung (170) eingerichtet ist, um Energie zum Aushärten des Liners (20) zu emittieren.

12. Die Vorrichtung (100, 200) nach Anspruch 11, wobei mehrere Aushärtevorrichtungen (170) konzentrisch um eine Längsachse des Körperelements (110) angeordnet sind.

13. Verfahren (600) zum Aushärten eines in einem Inversionsverfahren in ein Rohr eingezogenen Liners mit der Vorrichtung nach einem der Ansprüche 1 bis 12, **gekennzeichnet durch** die Schritte:
umstülpendes Einziehen (610) des Liners von einem Startpunkt aus in das Rohr, wobei der Liner mit der pneumatischen Kupplung der Vorrichtung verbunden ist, so dass die Vorrichtung mit in das Rohr eingezogen wird;
Öffnen (620) der pneumatischen Kupplung nach dem Einziehen des Liners, um die Verbindung zwischen der Vorrichtung und dem Liner zu lösen; und
Ziehen (630) der Vorrichtung zurück zum Startpunkt durch ein mit der Zugkupplung der Vorrichtung verbundenes Zugkabel und unter Abstrahlung einer Energie zum Aushärten des Liners.

## Claims

1. A device (100, 200) for curing a liner (20) inserted, via an inversion method, into a pipe (10), comprising:
a body element (110) with a first end portion (112) and a second end portion (114); and
a pull coupling (130) on the second end portion (114 ) of the body element (110), wherein the pull coupling (130) is arranged for connection to a pull cable (30),
**characterised by**
a pneumatic coupling (120) on the first end portion (112) of the body element (110), wherein the pneumatic coupling (120) is arranged for connection to a liner (20) to be inverted.

2. The device (100, 200) according to claim 1, wherein the pneumatic coupling (120) comprises a cylinder (122) and a piston (124), wherein the piston (124) is movably arranged in the cylinder (122), in particular wherein the cylinder (122) extends through the body element (110).

3. The device (100, 200) according to claim 2, wherein the piston (124) is movable along a longitudinal axis of the body element (110) between a first position and a second position, and/or wherein the piston (124) is arranged to retain the liner (20) in the first position and release the liner (20) in the second position.

4. The device (100, 200) according to claim 3, wherein the piston (124) is arranged to move from the second position to the first position upon pressurisation and to move from the first position to the second position upon depressurisation.

5. The device (100, 200) according to claim 3 or 4, further comprising at least one elastic element arranged to exert a force on the piston (124) in the direction of the second position, in particular wherein the at least one elastic element is a spring.

6. The device (100, 200) according to any one of claims 2 to 5, further comprising a receiving element (140) arranged to receive an end portion of the piston (124) in the first position.

7. The device (100, 200) according to claim 6, wherein:
- the receiving element (140) is a protrusion; and/or
- the receiving element (140) is a ridge, and/or
- the receiving element (140) is formed integral with the body element (110).

8. The device (100, 200) according to claim 6 or 7, wherein:
- the receiving element (140) has a wedge shape; and/or
- the receiving element (140) has an opening (142) into which the piston (124) can be introduced.

9. The device (100, 200) according to claim 6, 7 or 8, further comprising a receiving space (160) formed between one end of the cylinder (122) and the receiving member (140).

10. The device (100, 200) according to claim 9, wherein an eyelet of the liner (20) or of a fastener connected to the liner (20) is introducible into the receiving space (160) when the piston (124) is in the second position, and wherein the piston (124) can extend through the eyelet when the piston (124) is in the first position to retain the liner (20).

11. The device (100, 200) according to any one of claims 1 to 10, further comprising at least one curing device (170) disposed on the body element (110), in particular wherein the at least one curing device (170) is arranged to emit energy for curing the liner (20).

12. The device (100, 200) according to claim 11, wherein multiple curing devices (170) are concentrically disposed around a longitudinal axis of the body element (110).

13. A method (600) for curing a liner inserted, via an inversion method, into a pipe with the device according to of any one of claims 1 to 12, **characterised by** the steps of:
everting (610) the liner from a starting point into the pipe, wherein the liner is connected to the pneumatic coupling of the device so that the device is also inserted into the pipe;
opening (620) the pneumatic coupling after the liner has been inserted in order to release the device from the liner; and
pulling (630) the device back to the starting point by means of a pull cable connected to the pull coupling of the device and radiating an energy to cure the liner.

## Revendications

1. Dispositif (100, 200) destiné à durcir un chemisage (20) tiré dans un tuyau (10) dans un procédé d'inversion, comprenant :
un élément de corps (110) ayant une première partie d'extrémité (112) et une seconde partie d'extrémité (114) ; et
un accouplement de traction (130) à la seconde partie d'extrémité (114) de l'élément de corps (110), dans lequel l'accouplement de traction (130) est conçu pour être relié à un câble de traction (30),
**caractérisé par**
un accouplement pneumatique (120) à la première partie d'extrémité (112) de l'élément de corps (110), dans lequel l'accouplement pneumatique (120) est conçu pour être relié à un chemisage (20) à inverser.

2. Dispositif (100, 200) selon la revendication 1, dans lequel l'accouplement pneumatique (120) comprend un cylindre (122) et un piston (124), dans lequel le piston (124) est agencé de manière mobile dans le cylindre (122), en particulier dans lequel le cylindre (122) s'étend à travers l'élément de corps (110).

3. Dispositif (100, 200) selon la revendication 2, dans lequel le piston (124) est mobile le long d'un axe longitudinal de l'élément de corps (110) entre une première position et une seconde position, et/ou dans lequel le piston (124) est conçu pour maintenir le chemisage (20) dans la première position et pour libérer le chemisage (20) dans la seconde position.

4. Dispositif (100, 200) selon la revendication 3, dans lequel le piston (124) est conçu pour se déplacer de la seconde position à la première position lorsqu'une pression est appliquée, et pour se déplacer de la première position à la seconde position lorsque la pression est relâchée.

5. Dispositif (100, 200) selon la revendication 3 ou 4, comprenant en outre au moins un élément élastique qui est agencé de manière à exercer une force sur le piston (124) en direction de la seconde position, en particulier dans lequel le au moins un élément élastique est un ressort.

6. Dispositif (100, 200) selon l'une des revendications 2 à 5, comprenant en outre un élément de réception (140) qui est conçu pour recevoir une partie d'extrémité du piston (124) dans la première position.

7. Dispositif (100, 200) selon la revendication 6, dans lequel :
- l'élément de réception (140) est une saillie ; et/ou
- l'élément de réception (140) est un gradin, et/ou
- l'élément de réception (140) est réalisé d'un seul tenant avec l'élément de corps (110).

8. Dispositif (100, 200) selon la revendication 6 ou 7, dans lequel :
- l'élément de réception (140) a une forme de clavette ; et/ou
- l'élément de réception (140) comporte une ouverture (142) dans laquelle le piston (124) peut être introduit.

9. Dispositif (100, 200) selon la revendication 6, 7 ou 8, comprenant en outre un espace de réception (160) qui est formé entre une extrémité du cylindre (122) et l'élément de réception (140).

10. Dispositif (100, 200) selon la revendication 9, dans lequel un anneau du chemisage (20) ou un élément de fixation relié au chemisage (20) peut être utilisé dans l'espace de réception (160) lorsque le piston (124) est dans la seconde position, et dans lequel le piston (124) peut s'étendre à travers l'anneau lorsque le piston (124) est dans la première position afin de maintenir le chemisage (20).

11. Dispositif (100, 200) selon l'une des revendications 1 à 10, comprenant en outre au moins un dispositif de durcissement (170) qui est agencé sur l'élément de corps (110), en particulier dans lequel le au moins un dispositif de durcissement (170) est conçu pour émettre de l'énergie afin de durcir le chemisage (20).

12. Dispositif (100, 200) selon la revendication 11, dans lequel plusieurs dispositifs de durcissement (170) sont agencés de manière concentrique autour d'un axe longitudinal de l'élément de corps (110).

13. Procédé (600) pour durcir un chemisage tiré dans un tuyau dans un procédé d'inversion avec le dispositif selon l'une des revendications 1 à 12, **caractérisé par** les étapes consistant à :
tirer (610) le chemisage en le retournant à partir d'un point de départ dans le tuyau, le chemisage étant relié à l'accouplement pneumatique du dispositif de sorte que le dispositif est tiré dans le tuyau ;
ouvrir (620) l'accouplement pneumatique après la traction du chemisage afin de libérer la liaison entre le dispositif et le chemisage ; et
tirer (630) le dispositif en arrière vers le point de départ par un câble de traction relié à l'accouplement de traction du dispositif et émettant une énergie afin de durcir le chemisage.
